(19) Europäisches Patentamt
European Patent Office
Office européen des brevets

(11) **EP 1 645 804 A1**

(12) **EUROPÄISCHE PATENTANMELDUNG**

(43) Veröffentlichungstag:
**12.04.2006 Patentblatt 2006/15**

(51) Int Cl.:
**F23R 3/28** *(2006.01)*

(21) Anmeldenummer: **04024184.6**

(22) Anmeldetag: **11.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **SIEMENS AKTIENGESELLSCHAFT**
**80333 München (DE)**

(72) Erfinder: **Prade, Bernd Dr**
**45478 Mülheim (DE)**

(54) **Verfahren zum Betrieb eines Brenners, insbesondere eines Brenners einer Gasturbine, sowie Vorrichtung zur Durchführung des Verfahrens**

(57)     Die Erfindung betrifft ein Verfahren zum Betrieb eines Brenners (13), bei dem ein Brennstoff (15) dem Brenner (13) zugeführt, mit Verbrennungsluft (7) zu einem Brennstoff-LuftGemisch vermischt und in einem Brennraum (11) verbrannt wird. Im Hinblick auf eine besonders schadstoffarme Verbrennung ist es vorgesehen, zur Verringerung der Stickoxidemissionen eine Brennstoffeigenschaft gezielt im Hinblick auf eine vorgegebene Stickoxidemission einzustellen, wobei eine Änderung eines den Brennstoff (15) charakterisierenden Parameters ermittelt wird. Ein solcher Parameter kann beispielsweise der Wobbe-Index (WI) sein. Die Erfindung betrifft weiterhin eine Vorrichtung zur Durchführung des Verfahrens, welche eine Brennstoffbehandlungseinrichtung (23) umfasst, die eine Analyseeinrichtung (27) zur Analyse der aktuellen Brennstoffzusammensetzung sowie ein Kontroll- und Steuersystem (29) aufweist.

## FIG 2

EP 1 645 804 A1

**Beschreibung**

Die Erfindung betrifft ein Verfahren zum Betrieb eines Brenners, bei dem ein Brennstoff dem Brenner zugeführt, mit Verbrennungsluft zu einem Brennstoff-Luft-Gemisch vermischt und in einem Brennraum verbrannt wird.

Im Hinblick auf die weltweiten Bemühungen zur Senkung des Schadstoffausstoßes von Feuerungsanlagen, insbesondere bei Gasturbinen, wurden in den letzten Jahren Brenner und Betriebsverfahren für Brenner entwickelt, welche besonders geringe Ausstöße an Stickoxiden ($NO_x$) haben. Dabei wird vielfach Wert darauf gelegt, dass solche Brenner jeweils nicht nur mit einem Brennstoff, sondern möglichst mit verschiedenen Brennstoffen, beispielsweise Öl, Erdgas und/oder Synthesegas (z.B. Kohlegas) wahlweise oder sogar in Kombination betreibbar sind, um die Versorgungssicherheit und Flexibilität beim Betrieb zu erhöhen. Solche Brenner sind beispielsweise in der EP 0 276 696 B1 beschrieben.

Ein Problem bei der Auslegung von Brennern für alle möglichen verschiedenen Betriebsbedingungen und Betriebsstoffe, insbesondere auch bei Variation der Brennstoffzusammensetzung oder Brennstoffqualitätsschwankungen, besteht darin, dass die beim Betrieb jeweils benötigten Volumina (Brennstoffmassenstrom) der einzelnen Betriebsstoffe völlig verschieden sind, so dass es Schwierigkeiten macht, für alle Betriebsstoffe das gleiche Zuführungssystem und die gleichen Eindüsungsöffnungen zu verwenden. Daher ist es im Stand der Technik bekannt, für flüssige und gasförmige Stoffe jeweils verschiedene Zuführungssysteme zu verwenden. Ein weiteres Problem stellt sich aber auch dann, wenn wahlweise gasförmige Brennstoffe mit völlig verschiedenen spezifischen Brennwerten, beispielsweise Erdgas und Kohlegas, eingesetzt werden sollen. Die völlig verschiedenen Volumenverhältnisse bei Verwendung dieser beiden Brennstoffe und die unterschiedlichen chemischen Vorgänge bei deren Verbrennung erfordern eine Modifizierung und Erweiterung der bekannten Systeme.

Moderne Low-$NO_x$-Verbrennungssysteme basieren üblicherweise auf dem sogenannten Einmischkonzept "Jet in Crossflow". Schadstoffarme Verbrennung, insbesondere mit niedrigen $NO_x$-Emissionen, können dabei durch entsprechende Auslegungen der Einmischung des Brennstoffs in die querströmende Verbrennungsluft erfolgen. Eine wesentliche Auslegungsgröße ist dabei die Eindringtiefe der Brennstoffstrahlen in die querströmende Luft. Diese bestmöglich angepasste konstruktive Auslegung ist dann entsprechend nur für eine bestimmte Brennstoffzusammensetzung erfolgt. Die Erfindung geht nunmehr von der Problemstellung aus, dass bei einer zeitlichen Veränderung der Brennstoffzusammensetzung oder bei einem Brennstoffwechsel es zu einer Veränderung des Mischungsfeldes kommen kann, was bei ungünstiger Mischung in der Regel zu erhöhten $NO_x$-Emissionen führt.

Ausgehend von dieser Beobachtung ist es Aufgabe der Erfindung ein Verfahren zum Betrieb eines Brenners anzugeben, mit dem eine stickoxidarme Verbrennung auch bei einer Veränderung der Brennstoffzusammensetzung möglich ist. Des Weiteren ist es Aufgabe der Erfindung eine geeignete Vorrichtung zur Durchführung des Verfahrens anzugeben.

Die erstgenannte Aufgabe wird erfindungsgemäß gelöst durch ein Verfahren zum Betrieb eines Brenners, bei dem ein Brennstoff dem Brenner zugeführt, mit Verbrennungsluft zu einem Brennstoff-Luft-Gemisch vermischt und in einem Brennraum verbrannt wird, wobei zur Verringerung der Stickoxidemissionen eine Brennstoffeigenschaft gezielt im Hinblick auf eine vorgegebene Stickoxidemission eingestellt wird, wobei eine Änderung eines den Brennstoff charakterisierenden Parameters ermittelt wird.

Die Erfindung geht dabei von der Erkenntnis aus, dass eine Kompensation des Einflusses von Brennstoffzusammensetzungsschwankungen auf die $NO_x$-Emissionen möglichst nicht durch aufwendige brennerseitige Maßnahmen oder durch aufwendige konstruktive Anpassung im Brennraum erfolgen sollte, um eine ausreichende Flexibilität und zeitnahe Anpassung an die vorgegebene Stickoxidemission zu erreichen. Die bisher hierzu vorgeschlagenen Maßnahmen sind allein konstruktiver Art und konnten die Empfindlichkeit gegenüber Brennstoffqualitätsschwankungen - und damit Mischungsfeldschwankungen - nur bedingt reduzieren, aber nicht vollkommen eliminieren. Dies ist darauf zurückzuführen, dass jeweils für eine ganz bestimmte Brennstoffzusammensetzung (Brennstoffeigenschaft) eine "optimale" konstruktive Auslegung der Eindüse- und Einmischvorrichtungen des Brenners erfolgt. Designs mit einer Vielzahl von Eindüsungspunkten für den Brennstoff - gut verteilt über den durchströmten Querschnitt - oder den Einsatz von statischen Mischern zur Einstellung eines gewünschten Mischungsfeldes sind in Ermangelung der erforderlichen Flexibilität - insbesondere bei kurzfristigeren Brennstoffzusammensetzungsschwankungen nicht geeignet, um die Einhaltung einer zulässigen Schadstoffgrenze für die $NO_x$-Emission im Betrieb des Brenners oder der Verbrennungsanlage zu gewährleisten.

Mit der Erfindung wird somit erstmals vorgeschlagen eine besonders stickoxidarme Verbrennung dadurch zu erzielen, dass die Brennstoffeigenschaft bzw. Brennstoffzusammensetzung überwacht wird, um erforderlichenfalls bei einer Änderung eines den Brennstoff charakterisierenden Parameters durch geeignete Maßnahmen wieder einen optimalen schadstoffarmen Betriebsmodus bezüglich der Stickoxide einzustellen. Damit wird die Möglichkeit geschaffen, die Stickoxidemissionen über einen Brennstoff charakterisierenden Parameter in-situ unter einem vorgegebenen Grenzwert zu halten.

Vorzugsweise wird dabei der Brennstoff in die Verbrennungsluft eingedüst und mit der Verbrennungsluft vermischt. In dem Brenner wird Brennstoff und Verbrennungsluft zur Mischung gebracht, wobei durch das Eindüsen des Brennstoffs in die Verbrennungsluft auf eine möglichst günstige Eindringtiefe der Brennstoffstrahlen in die Verbrennungsluft zu achten ist. Somit kann das Mischungsfeld im Hinblick auf eine schadstoffarme Verbrennung eingestellt und unter Beachtung des den Brennstoff charakterisierenden Parameters auch während des Betriebs aufrechterhalten werden.

In einer besonders bevorzugen Ausgestaltung wird eine Änderung des den Brennstoff charakterisierenden Parameters registriert und einem Kontrollsystem übergeben. Dabei wird bevorzugt der durch den Brennstoff charakterisierende Parameter kontinuierlich erfasst und im Kontrollsystem ausgewertet. Die Bestimmung des den Brennstoff charakterisierenden Parameters kann dabei durch eine geeignete Messung während des Betriebs an dem Brennstoffstrom erfolgen und auf diese Weise der zeitliche Verlauf des den Brennstoff charakterisierenden Parameters gespeichert und bewertet werden.

Vorzugsweise wird die Brennstoffeigenschaft gezielt eingestellt, wobei auf einen Referenz- oder Sollwert des den Brennstoff charakterisierenden Parameters hin eingestellt wird, bei dem die vorgegebene Schadstoffemission vorliegt. Dabei kann in dem Kontrollsystem bereits ein vorab bestimmtes charakteristisches Kennfeld hinterlegt sein, das den Zusammenhang zwischen der Brennstoffzusammensetzung und der Stickoxidemissionen darstellt. Alternativ kann aber auch durch eine in-situ-Messung sowohl die aktuellen Stickoxidemissionswerte als auch die Brennstoffzusammensetzung simultan gemessen und dem Kontrollsystem übergeben werden.

In einer besonders bevorzugten Ausgestaltung wird als ein den Brennstoff charakterisierender Parameter der Wobbe-Index ermittelt. Ein üblicher Standard, um die Brennstoffzusammensetzung und Temperatur zu charakterisieren, ist der so genannte Wobbe-Index. Der Wobbe-Index gestattet es, einen Vergleich des auf das Volumen bezogenen Wärmeinhalts verschiedener Brennstoffe, insbesondere Brenngase, bei verschiedenen Temperaturen durchzuführen. Da ein Verbrennungssystem, wie z.B. eine Gasturbine dadurch betrieben wird, dass letztendlich Wärmeenergie in einem Brennraum freigesetzt wird und dass der Brennstoffstrom über die Steuerung eines Volumenstroms eingestellt wird, können Brennstoffe mit unterschiedlicher Brennstoffzusammensetzung aber mit noch relativ ähnlichen Wobbe-Indexes im Allgemeinen durch das selbe Brennstoffzufuhrsystem dem Brenner zur Verbrennung zugeführt werden. Schwankungen in der Brennstoffzusammensetzung führen zu Schwankungen in den Stickoxidemissionen, wobei über eine Einstellung des Wobbe-Index eine zulässige Höchstgrenze an Stickoxidemissionen im Betrieb der Gasturbine gewährleistbar ist.

Bei dem Verfahren gemäß der Erfindung wird die Ermittlung des Wobbe-Index des Brennstoffs vorzugsweise unter Auswertung des Zusammenhangs $WI = \dfrac{LHV}{\sqrt{SG \cdot T / T_{Ref}}}$ durchgeführt, wobei LHV der untere Heizwert des Brennstoffs, T dessen absolute Temperatur und SG das spezifische Gewicht des Brennstoffs relativ zur Luft unter Standardbedingungen, und $T_{Ref}$ eine Referenztemperatur ist.

Hierbei wird zur Einstellung des gewünschten Wobbe-Index vorzugsweise die Temperatur des Brennstoffs gezielt im Hinblick auf eine vorgegebene Stickoxidemission eingestellt. Der Wobbe-Index steht wie aus oben angegebener Formel in einem relativ einfachen Zusammenhang zur aktuellen Brennstofftemperatur, nämlich umgekehrt proportional zur Wurzel aus der Brennstofftemperatur. Somit kann bei einer Änderung des Wobbe-Index, d.h. einer Abweichung des Wobbe-Index von einem vorgegebenen Sollwert mit geringer Stickoxidemission, der gewünschte Wobbe-Index und damit die gewünschte Stickoxidemission durch eine entsprechende Regelung der Brennstofftemperatur eingestellt werden. Der Brennstoff kann je nach Lage zum Sollwert aufgewärmt oder abgekühlt werden, um über eine Temperatureinstellung den Soll-Wert des Wobbe-Index für die gewünschte $NO_x$-Emission zu erreichen.

Es ist aber auch möglich, dass zur Einstellung der Brennstoffeigenschaft ein Medium dem Brennstoff zugemischt wird. Auch hierdurch ist insbesondere eine Änderung des Wobbe-Index bedarfsweise zu erreichen, um einen schadstoffarmen Betrieb des Brenners sicherzustellen. Als Medium, welches dem Brennstoff zugedüst wird, kommt bevorzugt Wasser, Dampf oder Stickstoff infrage, aber auch z.B. Kohlenwasserstoffe mit hohem Heizwert.

Alternativ zum Wobbe-Index kann als ein den Betriebszustand charakterisierender Parameter auch das so genannte Impulsstromdichteverhältnis ermittelt und ausgewertet werden. Impulsstromdichteverhältnis: Die Mischungsqualität bei "Jet in Crossflow" hängt bei gegebener Geometrie fast nur vom Impulsstromdichteverhältnis ab. D.h. vom Quotient der Impulsstromdichte des Brennstoffstrahls (Jet) und der Impulsstromdichte der querströmenden Luft (Crossflow).

$$\text{Impuls} \quad \dot{I} = \dot{M} \cdot c = \rho \cdot c \cdot A \cdot c$$

$$\text{Impulsdichte } i = \dot{I}/A \text{ (Fläche)}$$
$$= \rho\, c^2$$

Impulsstromdichte der Luft ist im Wesentlichen gegeben durch Umgebungsbedingung und GT-Leistung. Impulsstromdichte des Brennstoffs ist außer von der GT-Leistung nur abhängig von der Brennstoffzusammensetzung. Über den Heizwert ergibt sich der Massenstrom und damit mit der Dichte bei fester Geometrie die Impulsstromdichte. Die Impulsstromdichte ist also keine Brennstoffeigenschaft sondern eine Größe, die von der Brennstoffzusammensetzung abhängt. Auch durch eine Überwachung der Brennstoffzusammensetzung im Betrieb des Brenners kann bei einer Änderung diese Größe wieder auf einen gewünschten Soll-wert geregelt werden.

Bevorzugt wird das Verfahren angewendet beim Betrieb eines Brenners einer Gasturbine. Die Anforderungen an die schadstoffarme Verbrennung beim Betrieb von Gasturbinen, insbesondere bei stationären Gasturbinen zur Energieerzeugung, sind in den letzten Jahren kontinuierlich gestiegen. Mit dem Verfahren gemäß der Erfindung ist ein schadstoffarmer Betrieb möglich, wobei während des Betriebs der Gasturbinenanlage bei Brennstoffzusammensetzungsschwankungen die oben beschriebenen Regelungsmaßnahmen bereits brennstoffseitig durchgeführt werden können. Auf aufwendige konstruktive brennerseitige Maßnahmen kann verzichtet werden.

Für den Betrieb wird bevorzugtermaßen ein flüssiger oder gasförmiger Brennstoff eingesetzt. Beispielsweise ist das Verfahren sowohl mit Öl, Erdgas oder einem Synthesegas, z.B. Kohlegas, anwendbar.

Die auf eine Vorrichtung gerichtete Aufgabe der Erfindung wird gelöst durch eine Vorrichtung zur Durchführung des Verfahrens mit einer Analyseeinrichtung zur Analyse der aktuellen Brennstoffzusammensetzung während des Brennerbetriebs und mit einem Kontroll- und Steuersystem zur Ermittlung einer Abweichung und zur Einstellung eines den Brennstoff charakterisierenden Parameters auf einen Sollwert, bei dem die vorgegebene Schadstoffemission vorliegt.

Die Vorteile der erfindungsgemäßen Vorrichtung ergeben sich sinngemäß aus den oben beschriebenen Vorteilen bezüglich des Verfahrens.

Bevorzugtermaßen ist dabei das Kontroll- und Steuersystem für eine Einstellung der Brennstofftemperatur des Brennstoffs ausgelegt, d.h. eine bedarfsweise Aufheizung oder Abkühlung des Brennstoffs.

Weiter bevorzugt umfasst das Kontroll- und Steuersystem Mittel zu kontrollierten Eindüsung eines Inertmediums, insbesondere Dampf, Wasser oder Stickstoff oder eines Kohlenwasserstoffs, in den Brennstoff.

Nachfolgend wird die Erfindung anhand eines Ausführungsbeispiels näher erläutert. Dabei zeigen schematisch und nicht maßstäblich:

FIG 1    eine Gasturbinenanlage,

FIG 2    in schematischer Darstellung eine Brennstoffbehandlungseinrichtung zum stickoxidarmen Betrieb der Gasturbinenanlage gemäß FIG 1, und

FIG 3    eine schematische Darstellung, die den Zusammenhang des Wobbe-Index als Funktion der Brenngastemperatur bei verschiedenen Brennstoffzusammensetzungen zeigt.

Gleiche Bezugszeichen haben in den Figuren die gleiche Bedeutung.

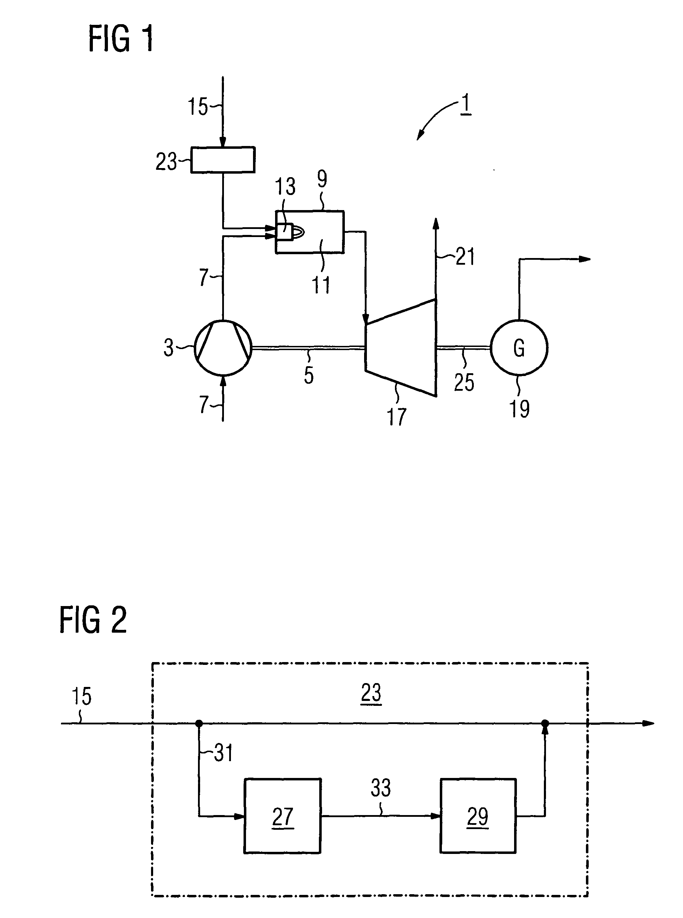

Die Gasturbinenanlage gemäß FIG 1 weist eine Gasturbine 1 auf, die einen Verdichter 3, eine Brennkammer 9 sowie eine der Brennkammer 9 nachgeschaltete Turbine 17 aufweist. Der Verdichter 3 und die Turbine 17 sind ggf. über eine gemeinsame Rotorwelle 5 miteinander gekoppelt. Der Turbine 17 nachgeschaltet ist z.B. ein elektrischer Generator 19 über eine Generatorwelle 25 an die Turbine 17 angekoppelt. Die Brennkammer 9 umfasst einen Brennraum 11 sowie einen in den Brennraum 11 hineinragenden Brenner 13 zur Verbrennung eines flüssigen oder gasförmigen Brennstoffs 15. Im Betrieb der Gasturbine 1 wird Luft 7 in den Verdichter 3 angesaugt und dort komprimiert. Die komprimierte Luft 7 wird als Verbrennungsluft dem Brenner 13 zugeführt und mit Brennstoff 15 vermischt. Das dabei entstehende Brennstoff-Luft-Gemisch wird in dem Brennraum 11 verbrannt, wobei heiße Verbrennungsgase entstehen. Die heißen Verbrennungsgase werden der Turbine 17 zugeführt, wo diese sich arbeitsleistend entspannen und sowohl die verdichterseitige Rotorwelle 5 als auch die Generatorwelle 25 in Rotation versetzen. Auf diese Weise wird elektrische Leistung erzeugt, welche der Generator 19 zur Verteilung in ein elektrisches Netz abgibt. Abströmseitig der Turbine 17 werden die teilweise abgekühlten und entspannten Verbrennungsgase als Abgas 21 abgegeben. Diese Abgase 21 sind schadstoffbehaftet, insbesondere sind Stickoxide in dem Abgas vorhanden, welche sich bei den hohen Verbrennungstemperaturen im Brennraum 11 bilden. Zu erhöhten Stickoxidemissionen kommt es auch, wenn das Brennstoff-Luft-Gemisch eine Veränderung des Mischungsfeldes erfährt, wie es z.B. bei einer zeitlichen Veränderung der Brennstoffzusammensetzung oder bei einem durchzuführenden Brennstoffwechsel kommen kann. Dies führt im Allgemeinen zu einer ungünstigeren Mischung und zu einem erheblichen Anstieg der Stickoxidbildungsrate beim Verbrennungsprozess. Bisherige Maßnahmen aus dem Stand der Technik beschränkt sich dabei lediglich auf eine neue angepasste konstruktive Auslegung des Verbrennungssystems, d.h. brennerseitige Maßnahmen, um bei einer geänderten Brennstoffzusammensetzung noch akzeptable Schadstoffemissionen zu ermöglichen.

Die Erfindung sieht demgegenüber keine konstruktiven brennerseitigen Maßnahmen vor, um dieses Problem zu lösen, sondern es wird auf die Brennstoffeigenschaften im Betrieb gezielt Einfluss genommen, um die vorgegebene Stickoxidemission als oberen Grenzwert einzuhalten. Hierzu ist die Gasturbine 1 im Zufuhrsystem für den Brennstoff 15 mit einer Brennstoffbehandlungseinrichtung 23 ausgestattet, welche Einrichtung 23 sowohl eine Analyse der aktuellen Brennstoffeigenschaft im Betrieb der Gasturbine 1 als auch eine gezielte Einstellung einer Brennstoffeigenschaft im Hinblick auf die vorgegebene Stickstoffemission zur Verringerung von Stickoxiden ermöglicht. Hierbei wird eine Änderung eines den Brennstoff 15 charakterisierenden Parameters ermittelt und überwacht.

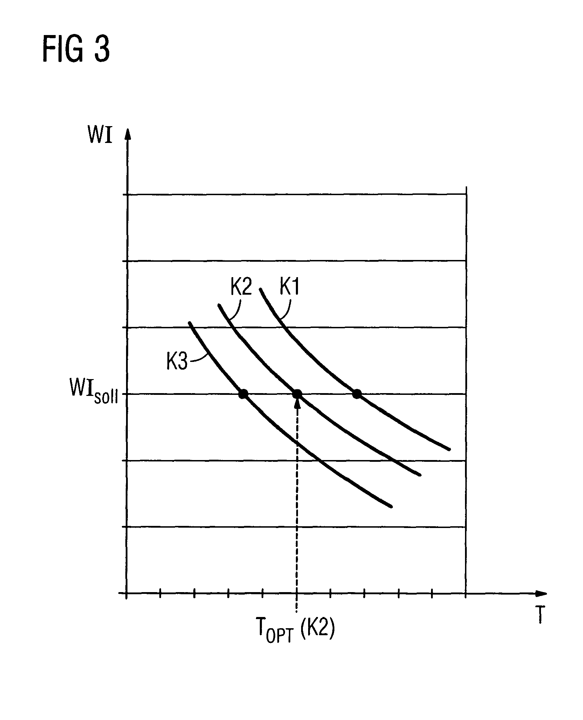

In FIG 2 ist in einer stark vereinfachten Darstellung die Brennstoffbehandlungseinrichtung 23 gezeigt. Die Einrichtung 23 umfasst eine Analyseeinrichtung 27 für den Brennstoff 15 und ein der Analyseeinrichtung 27 nachgeschaltetes Kontroll- und Steuersystem 29. Um eine Brennstoffeigenschaft gezielt zu überwachen, wird z.B. ein Analyse-Teilstrom 31 von dem Volumenstrom des Brennstoffs 15 abgezweigt und der Analyseeinrichtung 27 zu Analysezwecken zugeführt. In der Analyseeinrichtung 27 erfolgt die Analyse der Brennstoffzusammensetzung. Dabei wird insbesondere ein den Brennstoff 15 charakterisierender Parameter, wie beispielsweise der Wobbe-Index, welcher mittelbar Einfluss auf die aktuelle Stickoxidemission hat, bestimmt und dieser Wert als Ausgangssignal 33 dem Kontroll- und Steuersystem 29 übergeben. Dabei wird der den Brennstoff 15 charakterisierende Parameter in der Analyseeinrichtung 27 kontinuierlich erfasst und dem Kontroll- und Steuersystem 29 ausgewertet. In dem Kontroll- und Steuersystem wird ein Sollwert-Istwert-Vergleich durchgeführt und es wird die Brennstoffeigenschaft gezielt so eingestellt, dass auf den Referenz- oder Sollwert des den Brennstoff 15 charakterisierenden Parameters hin eingestellt bzw. geregelt wird, bei dem die vorgegebene Stickoxidemission vorliegt. Als ein den Brennstoff 15 charakterisierender Parameter ist der Wobbe-Index WI (siehe FIG 3) besonders geeignet. Dieser kann direkt über eine Einstellung der Brennstofftemperatur T geregelt werden, um auf einen gewünschten Wert zu kommen. Eine erforderliche Korrektur des Wobbe-Index WI bei Feststellung einer Abweichung vom Sollwert kann der Wobbe-Index WI alternativ auch z.B. über Eindüsung eines Mediums in den Brennstoff erreicht werden. Als geeignetes Inertmedium kommt beispielsweise Dampf, Wasser oder Stickstoff in Betracht, um den Wobbe-Index WI auf den Sollwert einzuregeln. Als ein möglicher Parameter kann alternativ auch das Impulsstromdichteverhältnis ermittelt und ausgewertet werden. Mit der Brennstoffbehandlungseinrichtung 23 ist eine in-situ-Regelung eines den Brennstoff charakterisierenden Parameters im Hinblick auf möglichst niedrige Stickoxidemissionen möglich. Der in der Brennstoffbehandlungseinrichtung 23 so behandelte Brennstoff 15 wird sodann dem Brenner 13 zugeführt, mit Verbrennungsluft 7 zu einem Brennstoff-Luft-Gemisch innig vermischt und in dem Brennraum 11 verbrannt, wie bereits weiter oben im Detail ausgeführt.

Der Wobbe-Index WI ist in besonderer Weise charakteristisch für die aktuelle Brennstoffzusammensetzung. Der Wobbe-Index WI steht in einem einfachen Zusammenhang mit der Brennstoff-temperatur T, wie in FIG 3 näher erläutert ist. FIG 3 zeigt ein Diagramm, wobei für unterschiedliche Brennstoffzusammensetzungen die Abhängigkeit des Wobbe-Index WI als Funktion der Brennstofftemperatur T dargestellt ist. Charakteristische Kurven K1,K2 und K3 stellen eine jeweilige Brennstoffzusammensetzung dar. Der Wobbe-Index WI ist umgekehrt proportional zur Wurzel aus der Brennstoff-Temperatur T. Da der Wobbe-Index die Brennstoffzusammensetzung charakterisiert, ist der Wobbe-Index WI auch im Zusammenhang mit den jeweiligen Stickoxidemissionen im Betrieb einer Gasturbine 1 zu sehen. Es gibt daher einen "optimalen" Wert für den Wobbe-Index $WI_{SOL}$, bei dem entsprechend niedrige Stickoxidemissionen zu verzeichnen sind. Bei einer Änderung der Brennstoffzusammensetzung im Betrieb der Gasturbine 1 wirkt sich daher eine Änderung im Wobbe-Index WI ergeben. Diese kann mittels der Analyseeinrichtung 27 festgestellt werden. Über eine Einstellung der Brennstoff-Temperatur T kann der Wobbe-Index WI bei der Temperatur $T_{OPT}$ (K2) wieder auf den Sollwert des Wobbe-Index $WI_{SOL}$ eingestellt werden, so dass ein gewünschter Wert an Stickoxidemissionen nicht überschritten wird.

Mit der Erfindung wird vorgeschlagen, die Eindringtiefe der Brennstoffstrahlen und damit das Mischungsfeld durch verschiedene Maßnahmen während des Betriebs der Gasturbine zu verändern bzw. zu korrigieren, wenn die Brennstoffzusammensetzung sich ändert. Dazu wird vorgeschlagen, einen den Brennstoff charakterisierender Parameter zu überwachen und im Hinblick auf die gewünschte Stickoxidemission einzustellen. Die Veränderung der Brennstoffzusammensetzung wird einem Kontroll- und Steuersystem übergeben, entweder als Eingabe per Hand oder über ein in das Kontrollsystem integriertes Mess- und Analysesystem 27 das die Brennstoffzusammensetzung kontinuierlich misst. über eine geeignete Umrechungsvorschrift - beispielsweise über eine Wobbe-Index-Regelung - kann eine geeignete Maßnahme vorgenommen werden. Möglichkeiten sind z.B. die Änderung der Brennstofftemperatur durch Vorwärmung bzw. Absenkung einer Brennstoffvorwärmung, die Zumischung von Dampf, Stickstoff oder ähnliches, bzw. Wasser zu Flüssigbrennstoffen, wie Heizöl. Eine unmittelbar geeignete Größe zur Beschreibung der entsprechenden Brennstoffeigenschaft ist die Wobbe-Zahl, für die es zwar unterschiedliche Definitionen gibt, die aber alle darauf zurückgeführt werden können, dass Medien mit gleicher Wobbe-Zahl bei gleichem Wärmeeintrag den gleichen Druckverlust an der Brennstoffdüse verursachen. Mit dem Druckverlust ist die Eindringtiefe der Brennstoffstrahlen in die Verbrennungsluft verknüpft, so dass die Verwendung und Einstellung eines den Brennstoff charakterisierenden Parameters wie die Wobbe-Zahl eine relativ einfache Umrechnungsvorschrift darstellt, um auf die gewünschte Stickoxidemission bei Schwankungen der Brennstoffzusammensetzung zu regeln. Andere Einstellgrößen, wie z.B. das Impulsstromdichteverhältnis sind ebenso denkbar.

**Patentansprüche**

1. Verfahren zum Betrieb eines Brenners (13), bei dem ein Brennstoff (15) dem Brenner (13) zugeführt, mit Verbrennungsluft (7) zu einem Brennstoff-Luft-Gemisch vermischt und in einem Brennraum (11) verbrannt wird, **dadurch gekennzeichnet, dass** zur Verringerung der Stickoxidemissionen eine Brennstoffeigenschaft gezielt im Hinblick auf eine vorgegebene Stickoxidemission eingestellt wird, wobei eine Änderung eines den Brennstoff (15) charakterisierenden Parameters ermittelt wird.

2. Verfahren nach Anspruch 1,
   **dadurch gekennzeichnet, dass** der Brennstoff (15) in die Verbrennungsluft (7) eingedüst und mit der Verbrennungsluft (7) vermischt wird.

3. Verfahren nach Anspruch 1 oder 2,
   **dadurch gekennzeichnet, dass** eine Änderung des den Brennstoff (15) charakterisierenden Parameters einem Kontrollsystem (29) übergeben wird.

4. Verfahren nach Anspruch 3,
   **dadurch gekennzeichnet, dass** der den Brennstoff (15) charakterisierende Parameter kontinuierlich erfasst und im Kontrollsystem (29) ausgewertet wird.

5. Verfahren nach einem der vorhergehenden Ansprüche,
   **dadurch gekennzeichnet, dass** die Brennstoffeigenschaft eingestellt wird, wobei auf einen Referenz- oder Sollwert des den Brennstoff (15) charakterisierenden Parameters hin eingestellt wird, bei dem die vorgegebene Stickoxidemission vorliegt.

6. Verfahren nach einem der vorhergehenden Ansprüche,
   **dadurch gekennzeichnet, dass** als ein den Brennstoff (15) charakterisierender Parameter der Wobbe-Index (WI) ermittelt wird.

7. Verfahren nach Anspruch 6,
   **dadurch gekennzeichnet, dass** die Ermittlung des Wobbe-Index (WI) des Brennstoffs (7) unter Auswertung der Formel

$$WI = \frac{LHV}{\sqrt{SG \cdot T / T_{Ref}}}$$

durchgeführt wird, wobei
LHV der untere Heizwert des Brennstoffs, T dessen absolute Temperatur, SG das spezifische Gewicht des Brennstoffs (15) relativ zur Luft unter Standardbedingungen und $T_{Ref}$ eine Referenztemperatur ist.

8. Verfahren nach Anspruch 6 oder 7,
   **dadurch gekennzeichnet, dass** zur Einstellung des gewünschten Wobbe-Index (WI) die Temperatur (T) des Brennstoffs gezielt im Hinblick auf eine vorgegebene Stickoxidemission eingestellt wird.

9. Verfahren nach Anspruch 6, 7 oder 8,
   **dadurch gekennzeichnet, dass** zur Einstellung der Brennstoffeigenschaft ein Medium dem Brennstoff (15) in kontrollierter Weise zugemischt wird.

**10.** Verfahren nach Anspruch 9,
**dadurch gekennzeichnet, dass** als Medium Dampf, Wasser, Stickstoff oder ein Kohlenwasserstoff verwendet wird.

**11.** Verfahren nach einem der Ansprüche 1 bis 5,
**dadurch gekennzeichnet, dass** als ein von Brennstoff (15) abhängiger Parameter das Impulsstromdichteverhältnis ermittelt und ausgewertet wird.

**12.** Verfahren nach einem der vorhergehenden Ansprüche, **gekennzeichnet durch** eine Anwendung beim Betrieb eines Brenners einer Gasturbine.

**13.** Verfahren nach einem der vorhergehenden Ansprüche,
**dadurch gekennzeichnet, dass** als Brennstoff (15) Öl, Erdgas oder ein Synthesegas, insbesondere Kohlegas, eingesetzt wird.

**14.** Vorrichtung (23) zur Durchführung des Verfahrens nach einem der vorhergehenden Ansprüche mit einer Analyseeinrichtung (27) zur Analyse der aktuellen Brennstoffzusammensetzung während des Brennerbetriebs und mit einem Kontroll- und Steuersystem (29) zur Ermittlung einer Abweichung und zur Einstellung eines den Brennstoff charakterisierenden Parameters auf einen Sollwert, bei dem die vorgegebene Schadstoffemission vorliegt.

**15.** Vorrichtung nach Anspruch 14,
**dadurch gekennzeichnet, dass** das Kontroll- und Steuersystem (29) für eine Einstellung der Brennstofftemperatur (T) des Brennstoffs (15) ausgelegt ist.

**16.** Vorrichtung nach Anspruch 14,
**dadurch gekennzeichnet, dass** das Kontroll- und Steuersystem (29) Mittel zur kontrollierten Eindüsung eines Mediums, insbesondere Dampf, Wasser oder Stickstoff oder eines Kohlenwasserstoffs, in den Brennstoff (15) umfasst.

## FIG 1

## FIG 2

## FIG 3

Europäisches
Patentamt

**EUROPÄISCHER RECHERCHENBERICHT**

Nummer der Anmeldung

EP 04 02 4184

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 03/062618 A1 (ALSTOM LTD; DOEBBELING, KLAUS; HAFFNER, KEN-YVES; RUEETSCHI, ROLF; ZI) 31. Juli 2003 (2003-07-31) | 1-6, 12-14,16 | F23R3/28 |
| Y | * Seite 4, Absatz 3 * <br> * Seite 4, Absatz 5 - Seite 6, Absatz 1 * | 7,9-11 | |
| A | * Seite 7, Absatz 3 - Seite 8, Absatz 1 * <br> * Seite 9, Absatz 2 * <br> * Seite 17, Absatz 2 - Seite 18, Absatz 1; Abbildung 6 * <br> ----- | 8,15 | |
| X | DE 103 02 487 A1 (ALSTOM LTD., BADEN) 31. Juli 2003 (2003-07-31) | 1-6, 9-14,16 | |
| Y | * Spalte 3, Absatz 15 - Absatz 16 * <br> * Spalte 4, Absatz 18 - Spalte 5, Absatz 21 * | 7,9-11 | |
| A | * Spalte 5, Absatz 26 - Spalte 6, Absatz 26 * <br> * Spalte 6, Absatz 29 - Absatz 30 * <br> ----- | 8,15 | |
| X | DE 197 31 209 A1 (STOCKBURGER, DIETER, DR.-ING., 67269 GRUENSTADT, DE) 28. Januar 1999 (1999-01-28) | 14,16 | |
| A | * Spalte 1, Zeile 3 - Zeile 37 * <br> ----- | 1 | RECHERCHIERTE SACHGEBIETE (Int.Cl.7) <br><br> F23R <br> F23N |
| X | US 6 495 731 B1 (CORDIER REMY ET AL) 17. Dezember 2002 (2002-12-17) | 14,16 | |
| A | * Spalte 2, Zeile 8 - Zeile 14 * <br> * Spalte 3, Zeile 15 - Spalte 4, Zeile 24 * <br> ----- | 1 | |
| A | DE 103 08 384 A1 (ALSTOM TECHNOLOGY LTD, BADEN) 9. September 2004 (2004-09-09) <br> * das ganze Dokument * <br> ----- | 1,14 | |
| A | US 6 121 628 A (RISING ET AL) 19. September 2000 (2000-09-19) <br> * das ganze Dokument * <br> ----- | 1,14 | |

Der vorliegende Recherchenbericht wurde für alle Patentansprüche erstellt

| Recherchenort | Abschlußdatum der Recherche | Prüfer |
|---|---|---|
| München | 1. Februar 2005 | Theis, G |

EPO FORM 1503 03.82 (P04C03)

**EP 1 645 804 A1**

## ANHANG ZUM EUROPÄISCHEN RECHERCHENBERICHT
## ÜBER DIE EUROPÄISCHE PATENTANMELDUNG NR.

EP 04 02 4184

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-02-2005

| Im Recherchenbericht angeführtes Patentdokument | Datum der Veröffentlichung | Mitglied(er) der Patentfamilie | Datum der Veröffentlichung |
|---|---|---|---|
| WO 03062618 A1 | 31-07-2003 | DE 10302487 A1<br>EP 1472447 A1 | 31-07-2003<br>03-11-2004 |
| DE 10302487 A1 | 31-07-2003 | WO 03062618 A1<br>EP 1472447 A1 | 31-07-2003<br>03-11-2004 |
| DE 19731209 A1 | 28-01-1999 | KEINE | |
| US 6495731 B1 | 17-12-2002 | FR 2788839 A1<br>AT 244857 T<br>DE 60003729 D1<br>DE 60003729 T2<br>DK 1022514 T3<br>EP 1022514 A1<br>ES 2203402 T3<br>JP 2000220820 A<br>PL 337960 A1<br>PT 1022514 T<br>SK 822000 A3<br>US 2003000574 A1 | 28-07-2000<br>15-07-2003<br>14-08-2003<br>27-05-2004<br>27-10-2003<br>26-07-2000<br>16-04-2004<br>08-08-2000<br>31-07-2000<br>28-11-2003<br>12-09-2000<br>02-01-2003 |
| DE 10308384 A1 | 09-09-2004 | WO 2004076925 A2 | 10-09-2004 |
| US 6121628 A | 19-09-2000 | KEINE | |

Für nähere Einzelheiten zu diesem Anhang : siehe Amtsblatt des Europäischen Patentamts, Nr.12/82